# EUROPÄISCHE PATENTSCHRIFT

(11) **EP 2 191 151 B1**
(45) Veröffentlichungstag und Bekanntmachung des Hinweises auf die Patenterteilung: **26.12.2012**
(21) Anmeldenummer: 08801092.1
(22) Anmeldetag: 29.07.2008
(51) Int. Cl.: F16B 12/24, F16B 13/02, F16B 13/04, F16B 13/14

(54) **DÜBEL FÜR SELBSTTÄTIGEN DECKPLATTENHINTERGRIFF UND DESSEN INJEKTIONSKLEBEVERFAHREN**
DOWEL PIN FOR AUTOMATICALLY GRIPPING BEHIND COVER PLATES AND A METHOD FOR THE INJECTION GLUING OF THE SAME.
CHEVILLE POUR LA PRISE PAR L'ARRIÈRE AUTOMATIQUE DANS UN PANNEAU DE COUVERTURE ET PROCÉDÉ DE COLLAGE PAR INJECTION DE LA CHEVILLE

(30) Priorität: 29.08.2007 DE 102007041058
(43) Veröffentlichungstag der Anmeldung: 02.06.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/001254
(87) Internationale Veröffentlichungsnummer: WO 2009/026874

(56) Entgegenhaltungen:
- CH-A5- 604 024
- DE-A1- 4 226 552
- DE-U1-202005 005 579
- GB-A- 1 273 604
- US-A- 2 092 341

## Beschreibung

Die Erfindung betrifft einen Dübel und dessen Injektionsklebeverfahren zur form- und stoffschlüssigen Befestigung an - in Stützkernbauweise gefertigten - flächigen Bauteilen mit einer ersten und einer zweiten Deckplatte und mindestens einer Stützkernzwischenlage, wobei der Dübel mindestens einen - zumindest ein Befestigungsmittel aufnehmenden - spreizkörper umfasst.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge z.B. durch Anschrauben befestigt werden, hat man das Problem, dass die Befestigungsmittel in der Regel nur an den relativ dünnen Decklagen bzw. Deckplatten Halt finden. Eine typische Lösung hierfür sind Spreizdübel, wie sie in der Druckschrift DE 20 2004 000 474 U1 offenbart sind. Die Spreizdübel haben jedoch den Nachteil, dass sie vorn und hinten die obere Platte großflächig umgreifen. Der hintere Umgriff verdrängt zudem weiträumig das Stützkernmaterial in der Umgebung der Bohrung, wodurch sich bei einer auf den Dübel wirkenden Zuglast die Deckplatte schneller vom Kernmaterial löst und abhebt.

Ferner ist aus dem Faltblatt "fischer Lelchtbauplattenbefestiger" des Unternehmens Fischer Befestigungssysteme GmbH seit dem Mai 2007 ein Klebedübel bekannt. Der Klebedübel ist ein rohrförmiger Körper, der in seinem oberen Bereich eine Vielzahl von Querbohrungen aufweist, die in einer Art Gewinderillen enden. Im unteren Bereich ist der Körper offen. Der untere Rand weist halbkreisförmige Kanäle auf. Zur Montage wird der Dübel in die Bohrung der Leichtbauplatte - ohne mechanische Fixierung - gesteckt. In die zentrale Bohrung des rohrförmigen Körpers wird eine Klebemasse gepresst, die im Bereich der Deckplatten aus dem Dübel austreten. Die Klebemasse füllt hierbei auch die zentrale Bohrung des Dübels aus. Das Befestigungselement, z.B. eine Schraube, wird dann in die Klebemasse der zentralen Bohrung eingeschraubt.

Die CH 604 024 A5 beschreibt einen klebstoffbeschichteten Anker, der mit Hilfe einer ihn umgebenden Hülse in einer Vollbohrung verklebt und verstemmt wird. Dazu wird in einen massiven Werkstoff eine Bohrung gebohrt. In die Bohrung wird der zylindrische Anker lose eingesteckt. Der Anker trägt an seinem nicht in die Bohrung eingetauchten Ende ein Befestigungsgewinde. Die Außenkontur des Ankers ist mit Mikroperlen besetzt. Beim Eintreiben der Hülse in die Bohrung, die zugleich am Anker entlanggleitet, werden die Mikroperlen zerquetscht. Der Anker, die Hülse und die Bohrung verkleben miteinander.

Die GB-A 1 273 604 beschreibt eine Dübelhülse, die ebenfalls nur in einer Bohrung einer Massivwandung einsetzbar ist. Die Dübelhülse wird dazu in die Bohrung gesteckt und dort mittels eines injizierbaren Klebstoffes fixiert. Ggf. kann das im Bohrungsgrund sitzende Dübelhülsenende mit einem Keil gespreizt werden.

Die DE 20 2005 005 579 U1 zeigt einen Klebedübel, der aus einer Hülse und einen Schaft besteht. In den hohlen Schaft wird nach dem Setzen des Klebedübels ein Klebstoff injiziert In dem zwischen dem Schaft und der Hülse liegenden Zwischenraum wird der Klebstoff zu den beiden Dübelenden hin verteilt.

Die DE 42 26 552 A2 beschreibt einen dübelartigen Halter für einschraubbare oder einschlagbare Befestigungsmittel. Der Halter besteht aus zwei aneinander angeformten Halbschalen, die zusammengeklappt einen kegelmantelförmigen Hohlkörper bilden. Der Hohlkörper hat mehrere radial abstehende und umlaufende Stege. An seinem unteren Ende trägt er vier radial abstehende biegeelastische Flügel. Sobald der Hohlkörper in eine Wandbohrung unter Verformung der Flügel eingesteckt ist, wird in die Bohrung des Hohlkörpers das Befestigungsmittel eingeschraubt. Ggf. wird vorher in die Bohrung ein Klebstoff eingespritzt, der über kleine Querbohrungen des Hohlkörpers zwischen die Stege fließen kann.

Der vorliegenden Erfindung liegt das Problem zugrunde, einen Dübel für Leichtbauplatten zu entwickeln, der bei einfacher Montage fest, sicher und dauerhaft in der Leichtbauplatte hält. Eine Montage an oder in festen Platteneinlagen oder an den jeweiligen Plattenriegeln ist hierbei nicht vorgesehen.

Das Problem wird mit den Merkmalen der Ansprüche 1 und 8 gelöst. Der gesetzte Dübel steckt in einer Ausnehmung des flächigen Bauteils, die zumindest die erste Deckplatte und die Stützkernzwischenlage durchdringt und in oder vor der zweiten Deckplatte endet. Der gesetzte Dübel hintergreift die erste Deckplatte mit mindestens einem dübelseitigen Hintergriffselement zumindest bereichsweise. Der Dübel weist eine Längsbohrung auf, die über Schräg- oder Querbohrungen und/oder Kanäle mit mindestens einem Hohlraum der Ausnehmung des flächigen Bauteils in Verbindung steht. In der Längsbohrung des Spreizkörpers ist entweder ein verschiebbarer Keilkörper mit einer Keilkörperausnehmung oder eine elastisch aufdehnbare Trennlippe oder eine Durchstechmembrane angeordnet.

In Anspruch 8 wird beschrieben, wie ein derartiger Dübel in eine entsprechende Bohrung der Leichtbauplatte eingesetzt und sowohl mechanisch als auch stoffschlüssig durch Einspritzen eines Klebstoffs verankert wird.

Mit der vorliegenden Erfindung wird ein Dübel für Leichtbauplatten geschaffen, der bei hoher Auszugskraft sowohl manuell als auch maschinell schnell und sicher gesetzt werden kann. Hierbei ist der Dübel so konstruiert, dass sein Fixieren in der Leichtbauplatte in zwei Stufen erfolgt. In einer ersten Stufe wird er rein mechanisch in der Leichtbauplatte unverrückbar arretiert. In einer zweiten Stufe wird er mittels eines von außen zugeführten Klebstoffes - mit oder ohne Klebstoffexpansion - am Arretierungsort an beiden Enden, ggf. auch im mittleren Dübelbereich so verklebt, dass die obere und die untere Deckplatte über den Dübel zusätzlich ausgesteift werden.

Der Klebstoff wird über eine Einspritznadel in die zentrale Bohrung des Dübels eingebracht, wobei der für die spätere Beschlagsbefestigung vorgesehene Befestigungsbereich dieser Bohrung nicht mit dem Klebstoff befüllt bzw. verunreinigt wird.

Bei der Einbringung des Klebstoffs kann eine bestimmte Klebstoffverteilung innerhalb der den Dübel tragenden Bohrung der Leichtbauplatte bewirkt werden. So können über ein Bohrungs- und/oder Kanalsystem, gedrosselt über die Bohrungs- und Kanalquerschnitte, der Klebstoffstrom nach oben und unten aufgeteilt werden. Der nach oben umgeleitete Klebstoffstrom gelangt in den Bereich der oberen Deckplatte, während der nach unten umgeleitete Klebstoffstrom die untere Deckplatte benetzt.

Eine andere Möglichkeit der Klebstoffverteilung besteht darin, die zentrale Bohrung des Dübels über eine elastische Trennlippe oder eine Durchstechmembran in einen unteren und einen oberen Bereich aufzuteilen. Wird mit der Einspritznadel die Trennlippe bzw. die Durchstechmembran geöffnet oder durchstochen, so kann die untere Deckplatte mit dem Dübel verklebt werden. Ist die dafür notwendige Klebstoffeinbringung beendet, wird die Einspritznadel ein Stück weit in der zentralen Bohrung zurückgezogen, um dann z.B. über Schräg- oder Querbohrungen und/oder Kanäle die obere Deckplatte mit dem Dübel zu verkleben.

Als Klebstoffe können Ein- oder Zweikomponentenkleber oder Leime verwendet werden. Ggf. können die Klebstoffe oder Klebstoffgemische auch aufschäumen.

Die erwähnte stoffschlüssige Befestigung beruht auf dem Wirkprinzip der Übertragung von Kräften, Biege- und Drehmomenten an mindestens einer Fügestelle durch stoffliches Vereinigen der Werkstoffe der Leichtbauplatte mit dem Werkstoff des Dübels unter Zuhilfenahme eines klebenden Zusatzwerkstoff.

Weitere Einzelheiten der Erfindung ergeben sich aus den Unteransprüchen und den nachfolgenden Beschreibungen schematisch dargestellter Ausführungsformen.
- Figur 1:: Dimetrische Darstellung eines Dübels mit angeformtemHintergriffsabschnitt von schräg unten;
- Figur 2:: wie Figur 1, jedoch von schräg oben;
- Figur 3:: Schnitt des Dübels nach den Figuren 1 und 2;
- Figur 4:: Draufsicht auf den Dübel;
- Figur 5:: teilweise gesetzter Dübel mit Dübelsetzeinrichtung;
- Figur 6:: wie Figur 5, jedoch nach dem Positionieren des Dübels und dem Verschieben des Keilkörpers;
- Figur 7:: wie Figur 6, jedoch nach dem Entfernen der Dübelsetzeinrichtungund dem Einspritzen des Klebstoffs;
- Figur 8:: Schnitt eines gesetzten Dübels mit Trennlippe;
- Figur 9:: wie Figur 8, jedoch mit gesetzter Einspritznadel;
- Figur 10:: wie Figur 9, jedoch mit teilweise zurückgezogener Einspritznadel;
- Figur 11:: verklebter Dübel nach Figur 8;
- Figur 12:: Dimetrische Darstellung eines Dübels mit großem Keilkörper und Längsschlitzen im Spreizkörper;
- Figur 13:: eingeklebter Dübel nach Figur 12.

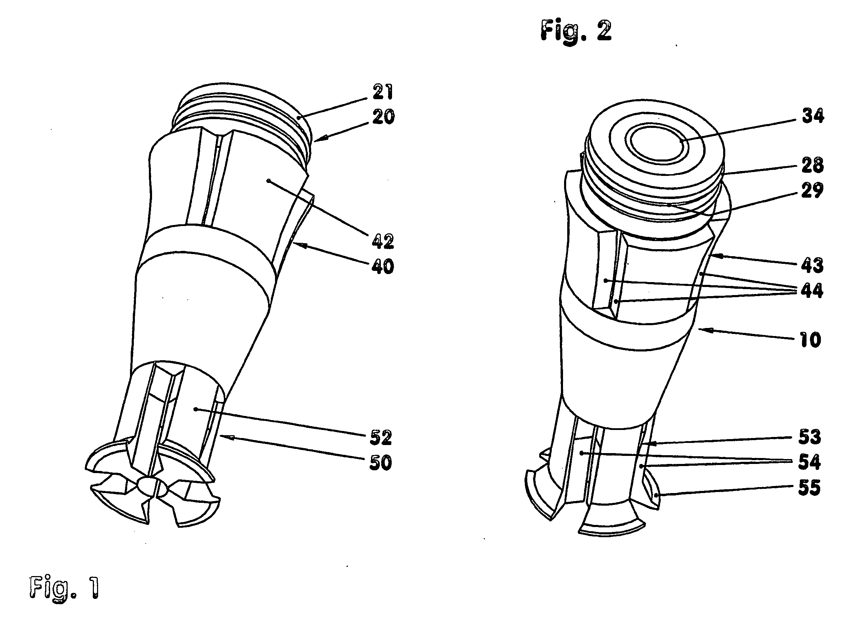

Die Figuren 1 und 2 zeigen einen unverformten Dübel. Der Dübel hat einen Spreizkörper (10), der aus drei größeren Bereichen (20, 40, 50) besteht. Ein oberer Bereich ist der Sitzabschnitt (20) mit der Zylinderzone (21). Der Sitzabschnitt (20) hat eine zentrale Gewindebohrung (34), die der Aufnahme von Befestigungselementen, wie z.B. Schrauben, dient. Ein mittlerer Bereich ist ein Hintergriffsabschnitt (40), der hier z.B. vier Hintergriffselemente (42) umfasst. Ein unterer Bereich (50) ist ein Spreizabschnitt, der z.B. ebenfalls vier Klemmelemente (52) aufweist.

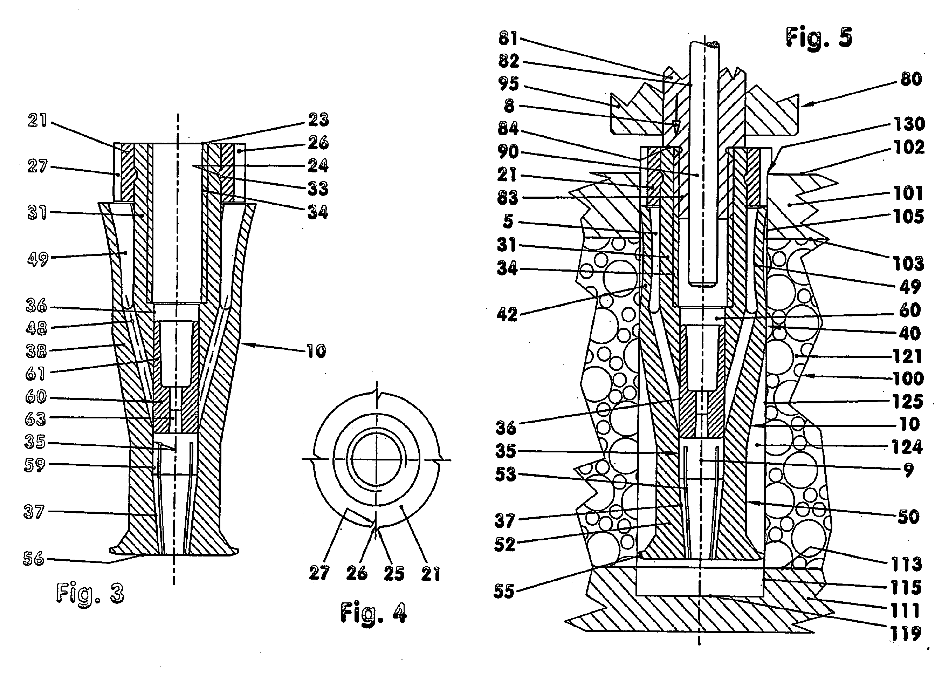

Der Dübel dient z.B. der Beschlagsbefestigung in Leichtbauplatten (100) ohne Riegel und festen Einlagen, vgl. Figur 5. Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innenliegenden Oberflächen (103, 113) mit dem plattenförmigen Stützkern (121) verklebt. Die dargestellte Leichtbauplatte hat z.B. eine Wandstärke von 20 bis 40 Millimetern. Jede Deckplatte ist hier 2 bis 8 Millimeter dick. Statt des Schaumkerns kann sie u.a. auch einen Wabenkern haben. In der Leichtbauplatte befindet sich eine Bohrung (130), die sich aus den Abschnitten (105), (125) und (115) zusammensetzt. Letzterer Abschnitt (115) ist eine Sacklochbohrung. Ihre Tiefe beträgt hier 25 bis 75% der Materialstärke der unteren Deckplatte (111). Ggf. kann anstelle der Sacklochbohrung (115) eine Durchgangsbohrung verwendet werden. Für einen Dübeltyp, wie er in den Figuren 1 und 2 dargestellt ist, kann u.a. die Sacklochbohrung (115) einen kleineren Durchmesser haben als die Bohrungen (105) und (125).

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Dübel montieren zu können wird die erste Deckplatte (101) und der Stützkörper (121) durchbohrt. Die zweite Deckplatte (111) wird entsprechend tief aufgebohrt. Die Deckplatte (111) wird hier also nicht durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden, z.B. wenn die Sacklochbohrung (115) der unteren Deckplatte (111) einen kleineren Durchmesser haben soll als die restliche Bohrung (105, 125). Die entstandene Ausnehmung, bzw. Bohrung (130) wird beispielsweise mit Pressluft freigeblasen oder leergesaugt.

In Figur 3 ist ein unverformter Dübel im Längsschnitt dargestellt. Durch alle drei Bereiche (20, 40, 50) erstreckt sich der Spreizkörper (10). Im Bereich (20) und in der oberen Hälfte des Bereichs (40) befindet sich ein zumindest annähernd zylindrischer Rohrabschnitt (31). Der Rohrabschnitt (31) hat hier eine zentrale Gewindebohrung (34) zur späteren Aufnahme einer metrischen Schraube.

Um den Rohrabschnitt (31) herum sind z.B. vier Hintergriffselemente (42) angeordnet. Die elastischen Hintergriffselemente (42) sind - in Schnitt nach Figur 3 gesehen - z.B. sichelförmig in der Art eines Trichters nach außen gespreizt. Ihr maximaler Außendurchmesser ist z.B. 2 bis 3 mm größer als der Innendurchmesser der Bohrung (105). Zwischen den einzelnen Hintergriffselementen (42) befinden sich z.B. nach oben aufweitende Längsschlitze (43). Die seitlichen Wandungen der Hintergriffselemente (42), also die an die Längsschlitze (43) angrenzenden Wandungen, liegen nur beispielhaft in Ebenen, in denen auch die Mittellinie (9) des Dübels liegt.

Die einzelnen Hintergriffselemente (42) enden oben - unterhalb der unteren Stirnfläche der Zylinderzone (21) in einer ebenen Stirnfläche, vgl. Figur 3. Letztere ist von der Stirnfläche der Zylinderzone (21) nur wenige Zehntel Millimeter entfernt.

Ggf. können die Hintergriffselemente (42) z.B. auch an einem Ring angeordnet sein, der separat kraft- und/oder formschlüssig am Spreizkörper (10) sitzt, vgl. auch DE 10 2007 031 183.

Die Hintergriffselemente (42) nach den Figuren 1 und 2 haben Seitenflächen (44), die pro Hintergriffselement (42) zueinander zumindest parallel verlaufen. Dadurch ist die Längsschlitzweite an der Innenseite der Hintergriffselemente (42) am kleinsten. Es ist auch denkbar, z.B. im oberen Bereich der Hintergriffselemente (42) einige radiale Bohrungen anzubringen, um dort später Klebstoff aus dem Hohlraum (49) austreten zu lassen.

Der Rohrabschnitt (31), die Hintergriffselemente (42) und die Stirnfläche der Zylinderzone (21) bilden einen nicht geschlossenen Hohlraum (49). Die Hintergriffselemente (42) formen dabei zumindest annähernd eine kegelstumpfmantelförmige Umhüllung des Hohlraumes (49).

Unterhalb des Rohrabschnitts (31) befindet sich ein konischer Abschnitt (38) des Spreizkörpers (10), der sich von den Hintergriffselementen (42) bis zum unteren Spreizabschnitt (50) erstreckt. Der Außendurchmesser des konischen Abschnitts (38) verjüngt sich - gemäß der Darstellung nach Figur 3 - von oben nach unten um ca. 30%. Er ist immer kleiner als der Innendurchmesser der Bohrung (105).

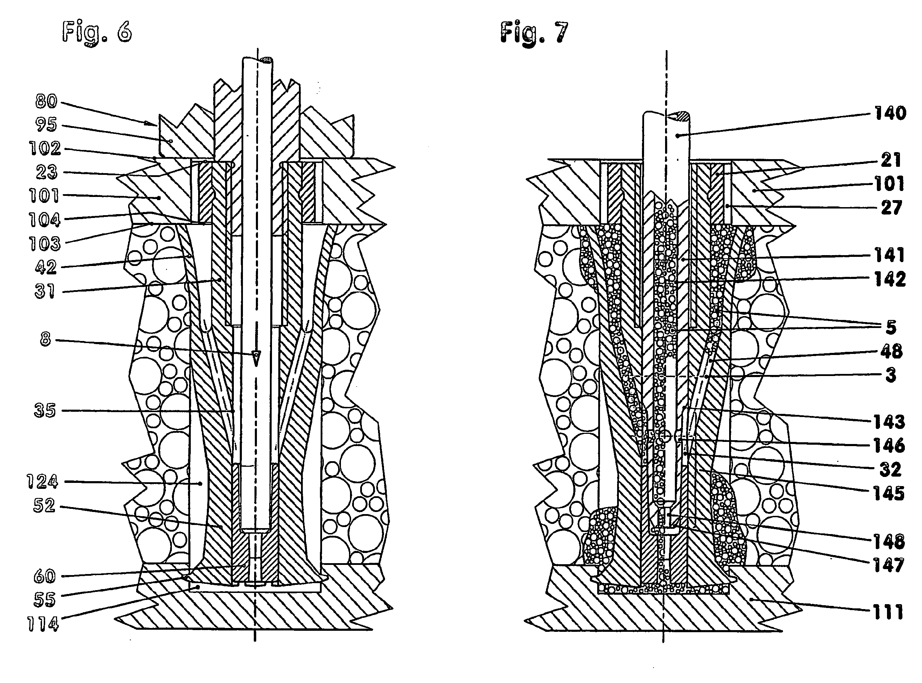

Die Gewindebohrung (34) des Rohrabschnitts (31) setzt sich im konischen Abschnitt (38) z.B. als glatte Bohrung (35) fort. Der Durchmesser der Bohrung (35) ist gleich oder kleiner als der Kerndurchmesser der Gewindebohrung (34). Die Bohrung (35) ist im mittleren Dübelbereich zylindrisch und im unteren Dübelbereich kegelstumpfmantelförmig ausgeführt. Der zylindrische Bohrungsabschnitt (36) ist über mehrere, z.B. vier Schrägbohrungen (48) mit dem Hohlraum (49) verbunden. Die Schrägbohrungen (48) enden unterhalb der Dübelmittenquerebene (3) in der Bohrung (35), vgl. Figur 7.

Im Spreizabschnitt (50) ist der kegelstumpfmantelförmige Bereich (37) der Bohrung (35) zur Ausbildung von z.B. vier Klemmelementen (52) mit vier Längsschlitzen (53) versehen, vgl. auch Figur 2. Die Längsschlitze (53) haben im unverformten Zustand eine konstante, minimale Spaltbreite. Sie liegen hier z.B. jeweils in der Verlängerung der Längsschlitze (43). Ggf. sind die seitlichen Wandungen der Klemmelemente (52) zumindest bereichsweise ähnlich orientiert wie die seitlichen Wandungen der Hintergriffselemente (42).

Die Längsschlitze (53) haben wie die Längsschlitze (43) eine 90°-Teilung. Ggf. sind sie spiralförmig, zick-zack-, mäander- oder zinnenförmig gewunden. Zur Kerbentlastung können die Längsschlitze (53) auch in radial angeordneten Ausrundungen enden.

Das untere Ende der Bohrung (35) hat nach Figur 3 einen Innendurchmesser, der größer ist als der halbe Innendurchmesser des zylindrischen Bereichs (36) der Bohrung (35).

Am unteren Ende des Spreizabschnitts (50) ist außen ein radial abstehender Steg (55) angeordnet. Der umlaufende Steg (55) wird jeweils durch die Längsschlitze (53) unterbrochen. Der Steg (55) hat z.B. eine radiale Höhe von ca. 0,3 bis 1 mm. Der maximale Durchmesser des Steges (55) ist bei radial unverformten Klemmelementen (52) kleiner als der Innendurchmesser der Bohrung (115), vgl. Figur 5.

Alternativ kann anstelle des Steges (55) auch ein ein- oder mehrgängiges Gewinde, eine umlaufende Querriffelung oder eine Noppenstruktur treten.

Die montierte Zylinderzone (21) schließt oben z.B. bündig mit dem Rohrabschnitt (31) ab. Zwischen der Stirnfläche (23) und der Oberkante der Hintergriffselemente (42) befindet sich in der Außenwandung des Rohrabschnitts (31) eine umlaufende Nut (33). In diese Nut (33) greift - zur axialen Fixierung der Zylinderzone (21) am Rohrabschnitt (31) - ein z.B. passgenauer Umlaufsteg (24) der Zylinderzone (21) ein.

Die radiale Außenkontur der Zylinderzone (21) weist mehrere, z.B. vier Längssperrstege (25) auf, vgl. Figur 4, die z.B. parallel zur Dübelmittellinie (9) verlaufen. Der einzelne Längssperrsteg (25) bildet zusammen mit jeweils einem benachbarten Längskanal (27) eine Verdrehsicherung des Dübels sowie eine Einspritzentlüftung. Der Längssperrsteg (25) hat eine Sperrflanke (26), die zugleich auch eine Flanke des Längskanals (27) darstellt. Die hier z.B. plane Sperrflanke (26) hat eine Flächennormale, die senkrecht zur Dübelmittellinie (9) orientiert ist und zugleich eine Tangente an einem Umrisskreis der Außenkontur der Zylinderzone (21) ist. Die jeweilige Flächennormale weist in Richtung des Uhrzeigersinnes, so dass die Längssperrstege (25) ein Verdrehen des Dübels beim Eindrehen eines Befestigungsmittels mit rechtsgängigem Gewinde verhindern.

Die Längssperrstege (25) stehen z.B. 0,1 bis 0,3 Millimeter über die zylindrische Außenkontur der Zylinderzone (21) über. Im Ausführungsbeispiel ragen die Längskanäle (27) 0,15 bis 0,35 Millimeter in die zylindrische Außenkontur hinein.

Ggf. kann beidseits eines z.B. im Querschnitt symmetrischen Längssperrsteges jeweils ein Längskanal angeordnet sein. Auf diese Weise wird eine Dübeldrehung in Ein- und Ausschraubdrehrichtung verhindert. Die Längskanäle (27) können auch unabhängig von dem Längssperrstegen ausgeführt sein. Auch müssen sie nicht geradlinig verlaufen.

Alternativ hat die Zylinderzone (21) nach den Figuren 1 und 2 z.B. zwei umlaufende Widerhakenstege (28). Die geschlossenen, ringförmigen Widerhakenstege (28) haben einen dreieckigen Einzelquerschnitt. Sie stehen z.B. 0,15 Millimeter über die dortige zylindrische Außenkontur über. Oberhalb eines jeden Widerhakensteges (28) befindet sich ein umlaufender Ringkanal (29) mit einem ebenfalls dreieckigen Einzelquerschnitt.

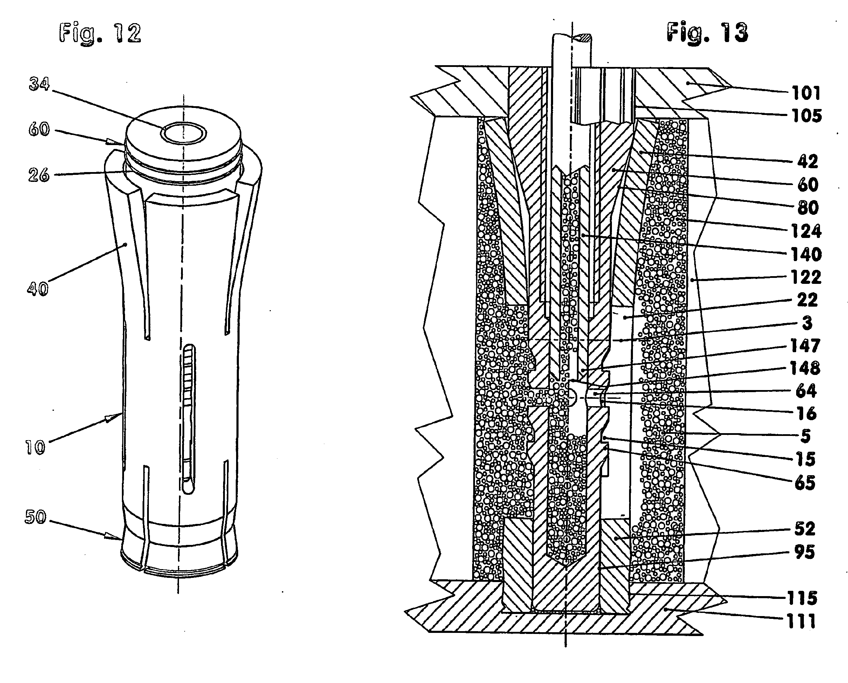

Die Widerhakenstege (28), vgl. auch Figur 12, bewirken u.a. ein verdrehsicherndes Verklemmen des Spreizkörpers (10) in der Bohrung (105). Zusätzlich dichten sie die Montagefuge zwischen dem Spreizkörper (10) und der Leichtbauplatte (100) ab, so dass dort weder Schmutz noch Feuchtigkeit eindringen kann. Auch kann auf diese Weise kein Stützkernmaterial und kein Klebstoff in die Umgebung oder an die Oberfläche (102) gelangen. Diese Variante eignet sich für Injektionsklebedübel, die nur mit geringen Klebstoffmengen auskommen.

In Figur 3 ist im Dübel ein Keilkörper (60) dargestellt, vgl. auch Figuren 5 bis 7. Der Keilkörper (60) ist hier im Wesentlichen ein zylindrisches Bauteil, das bei einem nicht montierten Dübel im zylindrischen Bereich (36) der Bohrung (35) sitzt. An seiner zylindrischen Außenfläche können Rastnocken oder dergleichen angeordnet sein, die in entsprechende Rastaussparungen der Bohrung (35) eingreifen. Auf diese Weise kann der Keilkörper (60) in bestimmten Positionen dauerhaft verrastet werden.

Der Keilkörper (60) hat z.B. an seiner dem Sitzabschnitt (20) zugewandten Seite ein Keilkörperhemd (61). Mit diesem rohrförmigen Hemd (61) wird die Länge des Keilkörpers (60) so weit verlängert, dass der Keilkörper (60) - in seiner unteren Extremlage, vgl. Figuren 6 und 7 - die Längsschlitze (53) zumindest nach oben hin verschließt.

Zum Beispiel im Zentrum des Keilkörpers befindet sich eine Keilkörperausnehmung (63), die die beiden Stirnseiten des Keilkörpers (60) miteinander verbindet. Die Keilkörperausnehmung (63) hat einen minimalen kreisförmigen Querschnitt, der beispielsweise dem minimalen Querschnitt einer Schrägbohrung (48) entspricht.

In den Ausführungsbeispielen ist der Keilkörper (60) bezüglich seiner Außenkontur zumindest großteils ein rotationssymmetrischer Körper. Alternativ hierzu können seine einzelnen Querschnitte oder zumindest ein Teil davon auch quadratische, polygonale, ovale oder anders profilierte Querschnitte haben. Ggf. kann der Keilkörper (60) mit dem Spreizkörper (10) z.B. über ein Gewinde verbunden sein, so dass der Keilkörper (60) nicht in einer linearen, nichtrotierenden Rastbewegung, sondern über eine Einschraubbewegung montiert wird.

Der Spreizkörper (10) und der Keilkörper (60) sind aus einem Kunststoff, z.B. aus einem Polyamid, gefertigt.

Die Figur 5 zeigt den Dübel beim Einsetzen in die Bohrung (130) einer Leichtbauplatte (100) mit Hilfe einer Dübelsetzeinrichtung (80). Die Hintergriffselemente (42) passieren unter Eigenverformung gerade die obere Deckplatte (101).

Die Dübelsetzeinrichtung (80) umfasst hier zumindest ein Greifrohr (81), einen Spreizstempel (90) und einen Niederhalter (95).

Das Greifrohr (81) ist ein z.B. rohrförmiges Bauteil, das eine Durchgangsbohrung (82) aufweist und an seinem vorderen Ende einen Gewindeabschnitt (83) trägt. Zur Aufnahme des Dübels wird der Gewindeabschnitt (83) in die dübelseitige Gewindebohrung (34) eingeschraubt. Bei Dübeln, deren zentrale Bohrung kein Gewinde aufweist, erfasst das Greifrohr (81) den Dübel in der zentralen Ausnehmung z.B. mittels kraftschlüssiger Greifelemente.

Alternativ kann die Bohrung (34) zur Aufnahme von nichtmetrischen Schrauben, z.B. Spanplattenschrauben oder Holzschrauben, einen recht- oder vieleckigen, ovalen, polygonförmigen oder sternförmigen Querschnitt haben. Ggf. verjüngt sich der Ausnehmungsquerschnitt vom Bohrungsanfang zum Bohrungsende hin stetig oder unstetig. Dies gilt auch für glattwandige Bohrungen mit zylindrischer oder konischer Mantelfläche. Für alle diese Formen gibt es die passenden Greifelemente.

In der Bohrung des Greifrohres (81) ist der Spreizstempel (90) längsverschiebbar geführt gelagert. Das Greifrohr (81) selbst sitzt längsgeführt in dem Niederhalter (95).

Das Greifrohr (81) liegt mit seinem Wellenbund (84) definiert an der oberen Stirnfläche (23) des Dübels an. Der Niederhalter (95) liegt auf der Oberfläche (102) der Leichtbauplatte (100) auf.

Figur 6 zeigt den Spreizkörper (10) nach Ablauf einer ersten und einer zweiten Einsetzbewegung in die Bohrung (130). Bei der ersten Einsetzbewegung wird der Spreizkörper (10) z.B. so weit in die Bohrung (130) eingeschoben, dass er den Grund (119) der Bohrung (115) berührt oder gerade noch nicht kontaktiert. Auf diese Weise ist sichergestellt, dass die Hintergriffselemente (42), die beim Durchschieben durch die Bohrung (105) radial gegen den Rohrabschnitt (31) gepresst wurden, nach dem Passieren der unteren Oberfläche (103) der oberen Deckplatte (101) frei kommen und sich wieder selbsttätig vom Rohrabschnitt (31) abspreizen.

Nach dem Abspreizen der Hintergriffselemente (42) wird der Spreizkörper (10) - in einer zweiten Einsetzbewegung - mittels des Greifrohres (81) entgegen der Dübelsetzrichtung (8) bewegt, um die oberen Stirnflächen oder Kanten der Hintergriffselemente (42) an der unteren Oberfläche (103) der oberen Deckplatte (101) anzulegen. Beim Zurückziehen des Dübels stützt sich die Dübelsetzeinrichtung (80) über den Niederhalter (95) an der äußeren Oberfläche (102) ab, vgl. Figur 6. Die Stirnfläche (23) des Spreizkörpers (10) liegt nun knapp unterhalb der Oberfläche (102).

In einem weiteren Verfahrensschritt werden die Klemmelemente (52) des Spreizkörpers (10) in der Sacklochbohrung (115) verklemmt, vgl. Figur 6. Dazu wird bei ortsfester Dübelsetzeinrichtung (80), d.h. der Niederhalter (95) und das Greifrohr (81) führen keine Relativbewegung zueinander aus, der Spreizstempel (90) gegen den Keilkörper (60) gefahren, um diesen in Dübelsetzrichtung (8) in der Ausnehmung (35) nach unten zu bewegen. Sobald der Keilkörper (60) in den konischen Bereich (37) der sich nach unten hin verjüngenden Ausnehmung (35) kommt; beginnen sich die Klemmelemente (52) zumindest annähernd radial nach außen abzuspreizen. Die einzelnen Abschnitte des Steges (55) krallen sich in die Wandung der Sacklochbohrung (115). Der Klemmvorgang ist erst beendet, wenn der Keilkörper (60) fast das untere Ende des Spreizkörpers (10) erreicht hat, vgl. Figur 6. Die Bohrung (35) hat nun eine zumindest annähernd zylindrische Form. Die Längsschlitze (53) sind maximal gespreizt und zugleich durch den Keilkörper (60) - zumindest nach oben hin - vollständig verdeckt. Der Dübel sitzt fest in der Leichtbauplatte (100).

Abschließend wird der Spreizstempel (90) zurückgezogen, das Greifrohr (81) aus der Gewindebohrung (34) herausgeschraubt und die Dübelsetzeinrichtung (80) von der Leichtbauplatte (100) weggeschwenkt.

Nach Figur 7 wird nun in die Bohrung (35) eine Einspritznadel (140) eingeführt. Letztere besteht u.a. aus einem Nadelrohr (141), an das sich ein im Durchmesser zurückgesetzter Nadelspitzenbereich (145) über einen Nadelabsatz (143) anschließt. Das Nadelrohr (141) und der Nadelspitzenbereich haben eine Nadelbohrung (142), die sich erst im unmittelbaren Bereich der Nadelspitze (147) zur Nadelspitzenbohrung (148) verengt. In der hinteren Zone des Nadelspitzenbereichs (145) befinden sich z.B. vier Querbohrungen (146). Die Querbohrungen (146) und die Nadelspitzenbohrung haben jeweils den gleichen Querschnitt.

Die Einspritznadel (140) wird nach Figur 7 soweit in die Bohrung (35) eingefahren, dass der Nadelabsatz (143) - unterhalb der Dübelmittenquerebene (3) vor den Schrägbohrungen (48) zum Stehen kommt. Der vordere Abschnitt des Nadelspitzenbereichs (145) steckt mit geringem Spiel im Keilkörperhemd (61) des Keilkörpers (60). Dort liegt die Nadelspitzenbohrung (148) gegenüber der Keilkörperausnehmung (63). Die Mittellinien der Querbohrungen (146) befinden sich auf einer Ebene, die zumindest in der Nähe einer Ebene liegt, die durch die Öffnungsmittelpunkte der Schrägbohrungen (48) aufgespannt wird. Zwischen dem Nadelabsatz (143) und der oberen Stirnseite des Keilkörperhemdes (61) bildet sich ein Ringkanal (32) aus, über den die Querbohrungen (146) mit den Schrägbohrungen (48) in Verbindung stehen.

Über die Nadelbohrung (142) wird Klebstoff (5) zugeführt. Entsprechend der Querschnittsverhältnisse der Nadelspitzenbohrung (148) und an den Querbohrungen (146) wird eine Klebstoffteilmenge über den Boden (56) und die Längsschlitze (53) in den Bereich der unteren Deckplatte (111) gepresst, während vier Teilmengen über die vier Querbohrungen (146), den Ringkanal (32) und die Schrägbohrungen (48) in den Hohlraum (49) und von dort aus u.a. über die Längsschlitze (43) in den Bereich der oberen Deckplatte (101) gelangen. Die Aufteilung des Klebstoffvolumenstroms zwischen oben und unten wird über die Anzahl der Querbohrungen (146) bestimmt.

Unten verklebt der Klebstoff den Spreizabschnitt (50) mit der unteren Deckplatte (111) und zumindest mit dem unteren Bereich des Stützkerns (121). Oben verkleben die Hintergriffselemente (42), der Rohrabschnitt (31), die Zylinderzone (21) und die obere Deckplatte (101) miteinander. Zumindest bereichsweise verklebt der obere Dübelbereich auch mit dem Stützkern (121).

Die beim Einpressen des Klebstoffs verdrängte Luft gelangt über die Längskanäle (27) der Zylinderzone (21) ins Freie.

Beim Zurückziehen der Einspritznadel (140) aus der Bohrung (35) wird ggf. auf den ersten Millimetern Nadelverfahrweg kurzzeitig eine geringe Klebstoffmenge abgegeben, um ein unterdruckbedingtes Hochsaugen des Keilkörpers (60) zu vermeiden.

Der verwendete Klebstoff ist als Einkomponentenkleber z.B. ein reaktiver Schmelzkleber auf Polyurethan-Basis. Er hat bei ca. 100° bis 120° Celsius eine Dichte von 3000 bis 60000 mPa·s. Es ist auch ein auf Polyurethan-Basis hergestellter feuchtigkeitsvernetzender Leim denkbar, der bei Zimmertemperatur eine Dichte von 4000 bis 8000 mPa·s hat. Beide Klebstoffe arbeiten ohne Volumenzunahme.

Aufgrund der hohen Dichte der Klebstoffe strömt beim Klebstoffeinpressen kein Klebstoff zwischen der Außenwandung der Einspritznadel (140) und Innenwandung der Bohrung (35) in Richtung der Gewindebohrung (34). Schließlich liegt die freie Spaltbreite zwischen beiden Wandungen im Bereich von 0,1 bis 0,2 Millimetern.

Alternativ kann auch in der Bohrung (35) ein Bohrungsbund angeordnet sein, auf dem sich ein an der Einspritznadel (140) befindender Wellenbund dichtend anlegt. Ggf. kann an diesem Wellenbund eine spezielle Dichtung angeordnet sein.

In den Figuren 7 und 13 sind halbseitig in den Bereichen, in denen die klebstoffführenden Bohrungen und Kanäle aufeinander treffen, die den Klebstoff symbolisierenden Blasenschraffuren weggelassen..

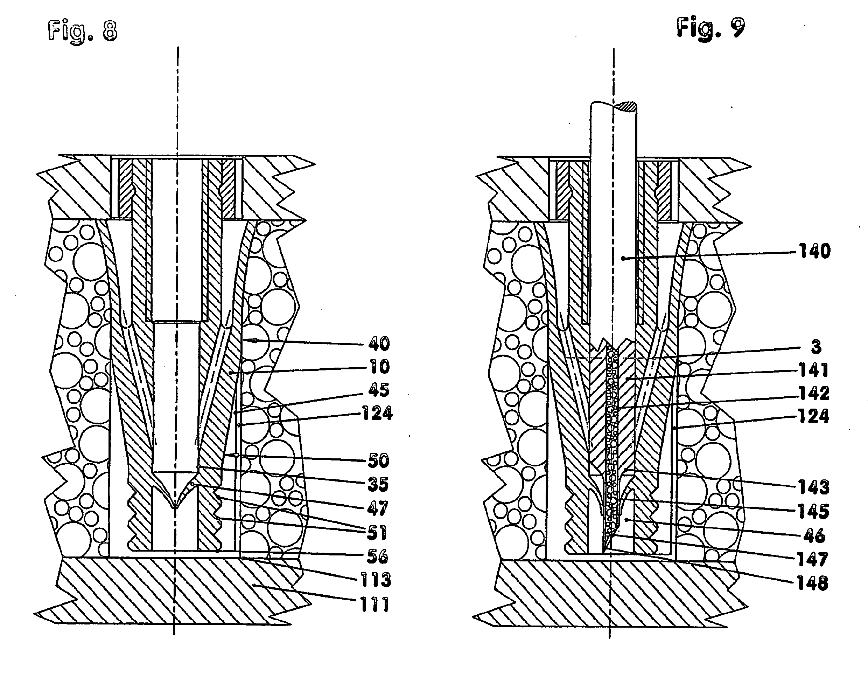

In den Figuren 8 bis 11 ist ein Dübel dargestellt, der einen Spreizkörper (10) hat, der vor der inneren Oberseite (113) der unteren Deckplatte (111) endet. Der Abstand zwischen der unteren Stirnseite des Spreizkörpers (10) und der Oberfläche (113) beträgt z.B. 0,1 bis 3 Millimeter.

Hier hat der Spreizkörper (10) eine zylindrische Bohrung (35), in der sich eine z.B. elastische Trennlippe (47) befindet. Die trichterförmig gestaltete, nach unten gewölbte und mittig offene Trennlippe (47) liegt nach Figur 8 auf halber Höhe zwischen den Einmündungen der Schrägbohrungen (48) in die Bohrung (35) und dem Boden (56). Ggf. hat die Trennlippe (47) radiale Einschnitte, die von der zentralen Öffnung ausgehen.

Die Bohrung (35) ist im Spreizabschnitt (50) unterhalb der Trennlippe (47) über Längsschlitze (53) mit der Dübelumgebung verbunden. Die Längsschlitze (53) haben die aus den Figuren 1 und 2 bekannte Form. Der Boden (56) kann z.B. konkav gekrümmt sein.

Im unteren Bereich hat hier der Spreizabschnitt (50) z.B. mehrere umlaufende Ringnuten (51). Sie haben beispielsweise dreieckige oder anders geformte Einzelquerschnitte. Anstelle der .Ringnuten kann der Spreizabschnitt (50) auch ein Außengewinde tragen.

Ggf. hat der Spreizkörper (10) in den Bereichen zwischen den Längsschlitzen (53) zusätzliche z.B. radial orientierte leitflächenartige Rippen (45), deren maximale radiale Ausdehnung den Durchmesser der Zylinderzone (21) erreichen kann. Die Oberfläche der Rippen (45) und/oder die Außenfläche des Bodens (56) kann - zur Verbesserung der Klebstoffanhaftung - fein oder auch grob strukturiert sein. Die Rippen (45) erstrecken sich z.B. bis zum Hintergriffsabschnitt (40).

Nach Figur 9 ist in die Bohrung (35) eine Einspritznadel (140) eingeführt. Das Nadelrohr (141) der Einspritznadel (140) verjüngt sich über einen Nadelabsatz (143) in einen Nadelspitzenbereich (145). Der Außendurchmesser des Nadelrohrs (141) reduziert sich z.B. um zwei Drittel des oberen Einspritznadeldurchmessers. Die zentrale Nadelbohrung (142) behält ihren Innendurchmesser über die gesamte dargestellte Einspritznadellänge bei. Die vordere Nadelspitze (147) ist unter 45 Winkelgraden abgeschrägt.

Die eingeführte Einspritznadel (140) hat mit ihrer Nadelspitze (147) die Trennlippe (47) elastisch aufgedehnt, so dass die Nadelspitzenbohrung (148) in den unteren Hohlraum (46) der Bohrung (35) hineinragt.

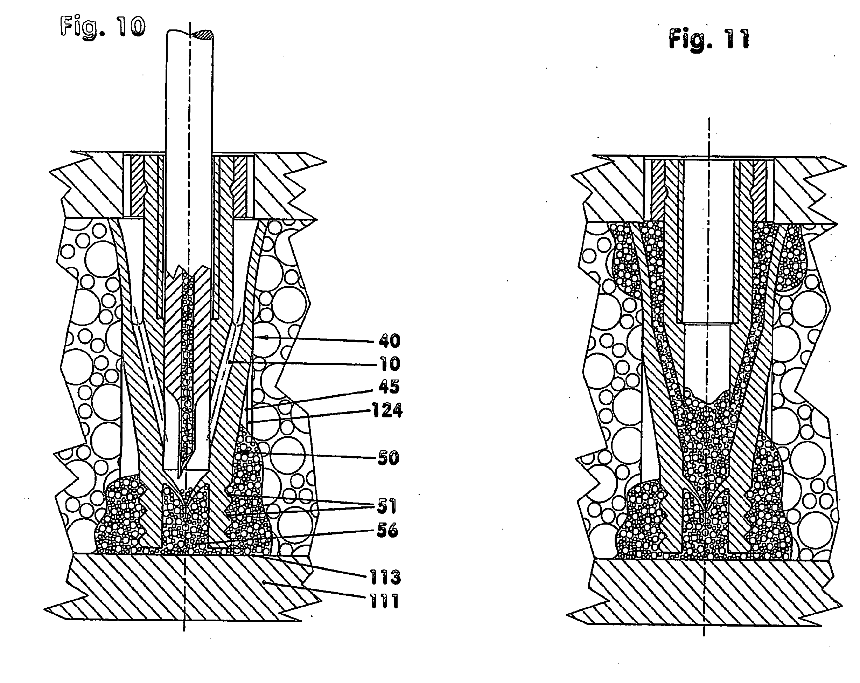

Nun wird über den Hohlraum (46) der untere Bereich des Dübels und die Bohrung (130) mit Klebstoff zumindest teilbefüllt. Beispielsweise wird eine konstante Klebstoffmenge ausgebracht, vgl. Figur 10. Anschließend wird die Einspritznadel (140) soweit zurückgezogen, bis sie hinter die sich wieder schließende Trennlippe (47) positioniert ist. Jetzt wird eine zweite Klebstoffmenge über die Nadelspitzenbohrung (148) in die Bohrung (35) oberhalb der Trennlippe (47) eingebracht. Im Ringkanal (32) verteilt sich der Klebstoff, um über die Schrägbohrungen (48) in den Hohlraum (49) zu strömen und von dort aus an die obere Deckplatte (101) herangeführt zu werden, vgl. auch Figur 11. Abschließend wird die Einspritznadel (140) in bekannter Weise zurückgezogen.

Alternativ kann auch bei diesem Dübel der Spreizabschnitt (50) die gleiche Ausgestaltung haben, wie in den Figuren 1 und 2 dargestellt. Der Spreizkörper (10) würde sich dann im Stützkern (121) aufspreizen und sich so zusätzlich verhaken. Der Klebstoff würde sich, wie zu Figur 11 beschrieben, im Hohlraum (124) ausbreiten.

In den Figuren 12 und 13 ist ein Dübel dargestellt, der einen Spreizkörper (10) und einen Keilkörper (60) umfasst, wobei der in den Spreizkörper (10) zumindest bereichsweise eingesteckte Keilkörper (60) eine Ausnehmung (34) zum Einschrauben eines Befestigungsmittels hat. Der gesetzte Dübel steckt in der Ausnehmung (130) des Bauteils (100), die die Deckplatten (101, 111) und die Stützkernzwischenlage (121) zumindest teilweise durchdringt. Der Spreizkörper (10) hat spreizbare Hintergriffs- (42) und Klemmelemente (52). Der Keilkörper (60) weist eine Zylinderzone (21) und zwei Keilzonen (80, 95) auf. Bei gesetztem Dübel liegt eine Zylinderzone (21) in der Bohrung (105) der ersten Deckplatte (101) an und die Keilzonen (80, 95) spreizen die Hintergriffs- (42) und Klemmelemente (52) des Spreizkörpers (10) in der Stützkernzwischenlage (121) und in der Sacklochbohrung (115) der zweiten Deckplatte (111) auf. Dabei verrastet eine Verrastung (65) des Keilkörpers (60) in der Verrastung (15) des Spreizkörpers (10), vgl. hierzu die DE 10 2006 049 952.

Nach Figur 13 ist in den Keilkörper (60) eine Einspritznadel (140) eingeführt. Auch ihre Nadelspitze (147) endet mit der Nadelspitzenbohrung (148) unterhalb der Dübelmittenquerebene (3).

Die Nadelspitze (147) liegt unmittelbar vor mindestens einer Querbohrung (64), hier sind es vier, die in einen Ringkanal (16) münden. Dieser Ringkanal (16) kommuniziert direkt über die Längsschlitze (22) des Spreizkörpers mit dem Hohlraum (124). Der Hohlraum (124) ist Teil der Wellstegeinlage (122). Über die Einspritznadel (140) wird der Klebstoff mittels der Querbohrungen (64), des Ringkanals (16) und der Längsschlitze (22) in den Hohlraum (124) gepresst. Ggf. wird der gesamte Hohlraum (124) befüllt.

Es besteht die Möglichkeit, bei allen Klebstoffeinbringungen den Klebstoffdruck zu überwachen. Die Klebstoffzufuhr wird erst unterbrochen, wenn der Klebstoffdruck durch das vollständige Verfüllen der den Dübel umgebenden Hohlräume messbar ansteigt.

Selbstverständlich ist das Prinzip des Dübels nicht auf Dübel mit zumindest bereichsweise zylindrischer Außenkontur beschränkt. Der Dübel kann z.B. auch für eine Ausnehmung konstruiert werden, die einen - zumindest abschnittsweise - langlochförmigen oder ovalen Querschnitt hat.

### Bezugszeichenliste:

- 3: Dübelmittenquerebene, normal zu (9)
- 5: Klebstoffe, Klebstoffschäume, Klebstoff- oder Klebstoffkomponentengemische
- 8: Dübelsetzrichtung
- 9: Mittellinie des Dübels

- 10: Spreizkörper
- 15: Verrastung
- 16: Ringkanal

- 20: Sitzabschnitt
- 21: Zylinderzone
- 22: Längsschlitze, Schlitze
- 23: Stirnflächen, oben
- 24: Umlaufsteg
- 25: Längssperrsteg, Oberflächenstruktur
- 26: Sperrflanke
- 27: Längskanal
- 28: Widerhakenstege, Umlaufstege, Oberflächenstruktur
- 29: Ringkanal, umlaufend

- 31: Rohrabschnitt
- 32: Ringkanal für (5)
- 33: Nut
- 34: Gewindebohrung
- 35: Längsbohrung, Bohrung
- 36: zylindrischer Abschnitt von (35)
- 37: kegelstumpfmantelförmiger Abschnitt von (35)
- 38: konischer Abschnitt
- 39: Schrägbohrungen

- 40: Hintergriffsabschnitt
- 42: Hintergriffselemente
- 43: Längsschlitze, Öffnung
- 44: Seitenflächen von (42)
- 45: Längsrippen, Rippen
- 46: Hohlraum unter (47)
- 47: Trennlippe
- 48: Schrägbohrungen, Kanäle
- 49: Hohlraum, Kanäle

- 50: Spreizabschnitt
- 51: Ringnuten, Grobgewinde
- 52: Klemmelemente
- 53: Längsschlitze, Öffnung
- 54: Seitenflächen von (52)
- 55: Steg, umlaufend
- 56: Boden
- 59: Hohlraum von (50)

- 60: Keilkörper
- 61: Keilkörperhemd
- 63: Keilkörperausnehmung
- 64: Querbohrung
- 65: Verrastung

- 80: Dübelsetzeinrichtung
- 81: Greifrohr
- 82: Durchgangsbohrung
- 83: Gewindeabschnitt
- 84: Wellenbund
- 90: Spreizstempel
- 95: Niederhalter

- 100: Sandwichplatte, Leichtkern-Verbundplatte; flächiges Bauteil in Stützkernbauweise
- 101: Deckplatte, oben
- 102: außenliegende Oberfläche
- 103: innenliegende Oberfläche
- 104: Hohlraum in (111)
- 105: Bohrung

- 111: Deckplatte, unten
- 113: innenliegende Oberfläche
- 114: Hohlraum in (111)
- 115: Sacklochbohrung, Sacklochausnehmung
- 119: Boden von (115)

- 121: Stützkern, Wabenkern, Schaumstoffkern
- 122: Wellstegeinlage, Wabenkern
- 124: Hohlraum in (121)
- 125: Bohrung

- 130: Gesamtbohrung, Ausnehmung

- 140: Einspritznadel
- 141: Nadelrohr
- 142: Nadelbohrung
- 143: Nadelabsatz
- 145: Nadelspitzenbereich
- 146: Querbohrungen, Austrittsöffnung
- 147: Nadelspitze
- 148: Nadelspitzenbohrung, Austrittsöffnung

## Patentansprüche

1. Dübel zur form- und stoffschlüssigen Befestigung mittels eines injizierbaren Klebstoffes (5) an - in Stützkernbauweise gefertigten - flächigen Bauteilen (100) mit einer ersten (101) und einer zweiten Deckplatte (111) und mindestens einer Stützkernzwischenlage (121), in einer Ausnehmung, die die erste Deckplatte (101) und die Stützkernzwischenlage (121) durchdringt und in oder vor der zweiten Deckplatte (111) endet,
- wobei der Dübel mindestens einen - zur Aufnahme zumindest eines Befestigungsmittels ausgebildeten - Spreizkörper (10) umfasst,
- wobei der Dübel in die Ausnehmung (130) des Bauteils (100) setzbar ist,
- wobei der Dübel an der ersten Deckplatte (10i) mit mindestens einem dübelseitigen Hintergriffselement (42) zumindest bereichsweise hintergreifend anlegbar ist,
- wobei der Dübel eine Längsbohrung (35) aufweist, die über Schräg- oder Querbohrungen (48) und/oder Kanäle (49) mit mindestens einem Hohlraum (104, 114, 124) der Ausnehmung (130) in Verbindung steht und
- wobei in der Längsbohrung (35) des Spreizkörpers (10) entweder ein verschiebbarer Keilkörper (60) mit einer Keilkörperausnehmung (63) angeordnet ist, wobei die Keilkörperausnehmung (63) die beiden Stirnseiten des Keilkörpers (60) miteinander verbindet oder als Querbohrung (64) ausgeführt ist, oder
wobei in der Längsbohrung (35) des Spreizkörpers (10) eine elastisch aufdehnbare Trennlippe (47) oder eine Durchstechmembrane angeordnet ist.

2. Dübel gemäß Anspruch 1, **dadurch gekennzeichnet, dass** die Schräg- oder Querbohrungen (48) und /oder Kanäle im mittleren Dübelbereich - bezogen auf die Dübellängsausrichtung - angeordnet sind.

3. Dübel gemäß Anspruch 1, **dadurch gekennzeichnet, dass** der Spreizkörper (10) eine Zylinderzone (21) aufweist, die über Längskanäle (27) zur Entlüftung der dübel- und bohrungsseitigen Hohlräume verfügt.

4. Dübel gemäß Anspruch 1, **dadurch gekennzeichnet, dass** die im Spreizkörper (10) vorhandene Ausnehmung (35) zur Führung eines Keilkörpers (60) einen zylindrischen (36) und einen kegelstumpfmantelförmigen Abschnitt (37) aufweist.

5. Dübel gemäß Anspruch 1, **dadurch gekennzeichnet, dass** der Spreizkörper (10) zur Ausbildung der Klemmelementen (52) im Spreizabschnitt (50) zumindest bereichsweise längsgeschlitzt ist.

6. Dübel gemäß Anspruch 1, **dadurch gekennzeichnet, dass** der Keilkörper (60) eine Länge hat, die größer ist als die Länge der zwischen den Klemmelementen (52) gelegenen Längsschlitze (53).

7. Dübel gemäß Anspruch 1, **dadurch gekennzeichnet, dass** bei gesetztem Dübel die in der Bohrung (105) sitzende zylinderzone (21) des Spreizkörpers (10) zur Verdrehsicherung des Dübels eine Oberflächenstruktur (25) aufweist.

8. Verfahren zur Montage eines Dübels in ein - in Stützkernbauweise gefertigtes - flächiges Bauteil (100) mit einer ersten (101) und einer zweiten Deckplatte (111) und mindestens einer stützkernzwischenlage (121), wobei der Dübel mindestens einen - zumindest ein Befestigungsmittel aufnehmenden - Spreizkörper (10) umfasst, **dadurch gekennzeichnet,**
- **dass** der Spreizkörper (10) in eine Ausnehmung (130) des Bauteils (100) eingesetzt wird, die die erste Deckplatte (101) und zumindest die Stützkernzwischenlage (121) durchdringt und in oder vor der zweiten Deckplatte (111) endet,
- **dass** der Spreizkörper (10) mindestens zwei Hintergriffselemente (42) aufweist, die sich nach dem Einsetzen in die Ausnehmung (130) im Bereich der Stützkernzwischenlage (121) hinter der ersten Deckplatte (101) selbsttätig spreizen,
- **dass** in eine Längsbohrung (35) des Dübels Klebstoff (5) mittels einer Einspritznadel (140) eingespritzt wird, der sich über Schräg- oder Querbohrungen (48) und/oder Kanäle (49) in dem Hohlraum (104, 114, 124) der Ausnehmung (130) verteilt, wobei die Einspritznadel (140) beim Injektionsvorgang in der Bohrung (35) mit geringem Radialspiel positioniert ist.

9. Verfahren zur Montage eines Dübels gemäß Anspruch 8, **dadurch gekennzeichnet, dass** der Spreizkörper (10) nach dem Spreizen der Hintergriffselemente (42), entgegen der Dübelsetzrichtung (8), von unten her - mit Hilfe einer Dübelsetzeinrichtung (80) - gegen die rückseitige Oberfläche der ersten Deckplatte (101) gezogen wird.

10. Verfahren zur Montage eines Dübels gemäß Anspruch 8, **dadurch gekennzeichnet, dass** die Einspritznadel (140) in dem Bereich, mit dem sie in die Bohrung (35) hineinragt, einen Au-βendurchmesser hat, der 0,1 bis 0,2 Millimeter kleiner ist als der Innendurchmesser der Bohrung (35).

11. Verfahren zur Montage eines Dübels gemäß Anspruch 8, **dadurch gekennzeichnet, dass** die Einspritznadel (140) beim Einspritzen so weit in die Bohrung (35) des Dübels hineinragt, dass die Nadelspitzenbohrung (148) oder alle Austrittsöffnungen (146, 148) der Einspritznadel (140) unterhalb der Dübelmittenquerebene (3) liegen.

## Claims

1. A anchor stud for securement in a form-fitting and substance-to-substance-bonded fashion by means of an injectable adhesive composition (5) in planar components (100) made in a supporting-core design, said components comprising a first cover panel (101), a second cover plate (111) and at least one intermediate supporting-core layer (121), with said stud to be secured in an opening extending through said first cover panel (101) and intermediate supporting core (121) and terminating in or before said second cover panel (111),
- said stud including at least one spreader body (10) configured to receive at least one fastener,
- said stud adapted to be set into opening (130) in component (100),
- said stud adapted to engage first cover panel (101) by at least one stud-side engage-behind element (42), such engagement being at least sector-wise,
- said stud having a longitudinal bore (35) extending therethrough and communicating via inclined or transverse bores (48) and/or channels (49) with at least one cavity (104, 114, 124) in opening (130), and
- with longitudinal bore (35) in spreader body (10) having disposed therein either a movable wedge element (60) having a wedge body recess (63) extending therethrough to interconnect the two end faces of wedge body (60) or configured as a transverse bore (64), or
with longitudinal bore (35) in spreader body (10) having therein a resiliently expandable separating lip (47) or a pierceing diaphragm.

2. Anchor stud as claimed in claim 1, **characterized in that** the inclined or transverse bores (48) and/or channels are disposed in the middle stud portion, relative to the longitudinal dimension of the stud.

3. Stud as claimed in claim 1, **characterized in that** spreader body (10) includes a cylindrical zone (21) having longitudinal channels (27) extending therealong for venting the stud- and bore-side cavities.

4. Stud as claimed in claim 1, **characterized in that** opening (35) in spreader body (10) includes a cylindrical section (36) and a frustroconincal section (37) for guiding a wedge body (60).

5. Stud as claimed in claim 1, **characterized in that** spreader body (10) is longitudinally slitted at least along spreader sections (50) thereof to form clamping elements (52).

6. Stud as claimed in claim 1, **characterized in that** wedge body (60) has a length greater than the length of longitudinal slits (53) between clamping elements (52).

7. Stud as claimed in claim 1, **characterized in that** the cylindrical zone (21) in bore (105) of spreader body (10) is structured on its surface so as to secure the stud against rotation in its installed condition.

8. A method of installing an anchor stud in a planar construction element (100) constructed in a supporting-core design and comprising a first cover panel (101), a second cover panel (111) and at least one intermediate supporting-core layer (121), said stud comprising at least one spreader body (10) adapted to receive at least one fastener, **characterized by**
- introducing spreader body (10) into an opening (130) in component (100) extending at least through first cover panel (101) and at least intermediate supporting-core layer (121) and terminating in or before second cover panel (111),
- spreader body (10) having at least two engage-behind elements (42) configured to automatically spread apart behind first cover panel (101) in the region of intermediate supporting-core layer (121) following introduction into opening (130), and
- injecting an adhesive composition (5) into a longitudinal bore extending through said stud, using an injection needle (140), said adhesive composition to distribute throughout cavity (104, 114, 124) of opening (130) via inclined or transverse bore (48) and/or channels (49), with said injection needle (140) being positioned in bore (35) with a slight radial clearance while injection progresses.

9. Method for installing an anchor stud as claimed in claim 8, **characterized in that**, following the spreading apart of the engage-behind elements (42), spreader body (10) is pulled from below against the rear surface of first cover panel (101) with the aid of a stud setting tool (80).

10. Method of installing an anchor stud as claimed in claim 8, **characterized in that** injection needle (140) has in the portion thereof extending into bore (35) an external diameter 0.1 to 0.2 mm less than the internal diameter of bore (35).

11. Method of installing an anchor plug as claimed in claim 8, **characterized in that**, during injection, injection needle (140) extends into bore (35) of said stud so that opening (148) at the tip of the needle or all exit openings (146, 148) of needle (140) lie below the middle transverse plane (3) of said stud.

## Revendications

1. Cheville destinée à être fixée mécaniquement et par liaison de masse à l'aide d'un adhésif injectable (5) dans des éléments plans de construction sandwich (100), composés d'une première plaque de recouvrement (101) et d'une deuxième plaque de recouvrement (111) et au moins d'une couche intermédiaire (121) formant une âme de renfort, dans un évidement qui traverse la première plaque de recouvrement (101) et la couche intermédiaire (121) et qui se termine dans ou devant la deuxième plaque de recouvrement (111),
- la cheville étant composée au moins d'un corps expansible (10) qui peut recevoir au moins un moyen de fixation,
- la cheville pouvant être insérée dans l'évidement (130) de l'élément de construction (100),
- la cheville pouvant être posée avec au moins un élément de prise arrière (42) qui s'accroche, au moins par endroits, derrière la première plaque de recouvrement (101),
- la cheville présentant une forure longitudinale (35) reliée au moins à une cavité (104, 114, 124) de l'évidement (130) par des forures obliques ou transversales (48) et/ou par des canaux (49) et
- la forure longitudinale (35) du corps expansible (10) présentant un coin déplaçable (60) avec un évidement (63) qui relie les deux faces frontales du coin (60) ou qui est réalisé sous forme d'une forure transversale (64), ou bien la forure longitudinale (35) du corps expansible (10) présentant une lèvre de séparation (47) élastiquement extensible ou une membrane perforable.

2. Cheville selon la revendication 1, **caractérisée en ce que** les forures obliques ou transversales (48) et/ou les canaux sont disposés dans la partie centrale de la cheville, dans le sens longitudinal de la cheville.

3. Cheville selon la revendication 1, **caractérisée en ce que** le corps expansible (10) présente une zone cylindrique (21) qui dispose de canaux longitudinaux (27) destinés à l'élimination de l'air dans les cavités de la cheville et des forures.

4. Cheville selon la revendication 1, **caractérisée en ce que** l'évidement (35) dans le corps expansible (10) présente une section cylindrique (36) et une section tronçonique (37) pour le guidage d'un coin (60).

5. Cheville selon la revendication 1, **caractérisée en ce que** le corps expansible (10) présente des fentes longitudinales, tout au moins par endroits, dans la section expansible (50), pour la formation des éléments de serrage (52).

6. Cheville selon la revendication 1, **caractérisée en ce que** le coin (60) a une longueur supérieure à la longueur des fentes longitudinales (53) qui se trouvent entre les éléments de serrage (52).

7. Cheville selon la revendication 1, **caractérisée en ce que**, lorsque la cheville est posée, la zone cylindrique (21) dans la forure (105) du corps expansible (10) présente une structure de surface (25) assurant une sécurité anti-rotation de la cheville.

8. Procédé pour le montage d'une cheville dans un élément plan de construction sandwich (100), composé d'une première plaque de recouvrement (101) et d'une deuxième plaque de recouvrement (111) et au moins d'une couche intermédiaire (121) formant une âme de renfort, la cheville étant composée au moins d'un corps expansible (10) qui peut recevoir au moins un moyen de fixation, **caractérisée en ce que**
- le corps expansible (10) est placé dans un évidement (130) de l'élément de construction (100) qui traverse la première plaque de recouvrement (101) et au moins la couche intermédiaire (121) formant une âme de renfort et qui se termine dans ou devant la deuxième plaque de recouvrement (111),
- le corps expansible (10) présentant au moins deux éléments de prise arrière (42) qui, après avoir été posés dans l'évidement (130), s'écartent automatiquement derrière la première plaque de recouvrement (101), à l'intérieur de la couche intermédiaire (121),
- que de l'adhésif est injecté dans une forure longitudinale (35) de la cheville à l'aide d'une aiguille d'injection (140) et qu'en passant par des forures obliques ou transversales (48) et/ou par des canaux (49), cet adhésif se répartit dans la cavité (104, 114, 124) de l'évidement (130), l'aiguille d'injection (140) étant positionnée lors d'une injection avec un petit jeu radial dans la forure.

9. Procédé pour le montage d'une cheville selon la revendication 8, **caractérisée en ce que** le corps expansible (10), après l'écartement des éléments de prise arrière (42), est tiré par le bas, à l'aide d'un dispositif de pose de chevilles (80), dans le sens opposé au sens de pose de la cheville (8), vers la surface arrière de la première plaque de recouvrement (101).

10. Procédé pour le montage d'une cheville selon la revendication 8, **caractérisée en ce que** le diamètre extérieur de la section de l'aiguille d'injection (140) engagée dans la forure (35) est inférieur de 0,1 à 0,2 millimètres au diamètre intérieur de la forure (35).

11. Procédé pour le montage d'une cheville selon la revendication 8, **caractérisée en ce que** lors d'une injection l'aiguille d'injection (140) s'engage suffisamment dans la forure (35) de la cheville pour que la forure de la pointe de l'aiguille (148) ou toutes les ouvertures de sortie (146, 148) de l'aiguille d'injection (140) se trouvent au-dessous du plan transversal central de la cheville (3).
